# EUROPEAN PATENT SPECIFICATION

(11) **EP 4 461 580 B1**
(45) Date of publication and mention of the grant of the patent: **17.06.2026**
(21) Application number: 22927465.9
(22) Date of filing: 28.11.2022
(51) Int. Cl.: B60L 3/00, B60L 58/12, B60L 53/60, B60L 3/12, B60L 53/62, B60L 53/68, B60L 58/24, A62C 3/07, B60L 53/18, B60L 58/15, H01M 10/0525, H01M 10/625, H01M 50/204

(54) **BATTERY MANAGEMENT APPARATUS AND OPERATING METHOD THEREOF**
BATTERIEVERWALTUNGSVORRICHTUNG UND BETRIEBSVERFAHREN DAFÜR
APPAREIL DE GESTION DE BATTERIE ET SON PROCÉDÉ DE FONCTIONNEMENT

(30) Priority: 15.02.2022 KR 20220019799
(43) Date of publication of application: 13.11.2024
(73) Proprietor: LG Energy Solution, Ltd., Seoul 07335 (KR)
(72) Inventor: KIM, Jin, Daejeon 34122 (KR)
(74) Representative: Plasseraud IP
(86) International application number: PCT/KR2022/018970
(87) International publication number: WO 2023/158069

(56) References cited:
- CN-A- 113 746 183
- CN-B- 110 265 736
- JP-A- 2012 200 103
- KR-A- 20130 055 179
- KR-A- 20150 091 774
- KR-B1- 101 280 004
- KR-B1- 102 352 308
- KR-B1- 102 352 308
- US-A1- 2014 152 445
- US-B2- 9 496 734

## Description

### [TECHNICAL FIELD]

### CROSS-REFERENCE TO RELATED APPLICATION

This application claims priority to and the benefit of Korean Patent Application No. 10-2022-0019799 filed in the Korean Intellectual Property Office on February 15, 2022.

### TECHNICAL FIELD

Embodiments disclosed herein relate to a battery management apparatus and an operating method thereof.

### [BACKGROUND ART]

Recently, research and development of secondary batteries have been actively performed. Herein, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

When charging a battery included in a vehicle, a user is often absent while connecting a connector to the vehicle. After completion of battery charge, all devices inside the vehicle enter a sleep mode after a preset time to prevent the vehicle from being discharged, making it difficult to collect data in case of occurrence of ignition inside the vehicle or take measures to prevent ignition.

Document US 2014/152445 discloses a warning system for detecting a battery fire in a battery of an electric or hybrid vehicle of the related art.

Document KR 2013 0055179 discloses an apparatus and method for managing a battery temperature of an electric vehicle,

Document CN 113 746 183 discloses a lithium battery electric bicycle conductive safe fast charger and a charging method of known type.

Document CN 110 265 736 relates to an energy storage power station battery management system having an intelligent fire early-warning function and an early-warning method.

### [DISCLOSURE]

### [TECHNICAL PROBLEM]

Embodiments disclosed herein aim to provide a battery management apparatus and an operating method thereof in which in case of occurrence of ignition inside a vehicle after completion of vehicle charge, an operation of detecting and preventing ignition may be performed.

Embodiments disclosed herein aim to provide a battery management apparatus and an operating method thereof in which after completion of vehicle charge, minimum power may be supplied from a charging connector to enable constant monitoring of ignition inside the vehicle.

Technical problems of the embodiments disclosed herein are not limited to the above-described technical problems, and other unmentioned technical problems would be clearly understood by one of ordinary skill in the art from the following description.

### [TECHNICAL SOLUTION]

A battery management apparatus according to an embodiment disclosed herein is defined in the appended claims.

An operating method of a battery management apparatus according to an embodiment is also provided.

### [ADVANTAGEOUS EFFECTS]

A battery management apparatus and an operating method thereof according to an embodiment disclosed herein may detect ignition inside a vehicle and perform a required operation because there is no need to enter a sleep mode even when charge of the vehicle is completed.

A battery management apparatus and an operating method thereof according to an embodiment disclosed herein may constantly monitor a state of the vehicle after completion of charge of the vehicle to collect data in case of occurrence of ignition inside the vehicle, thereby fundamentally analyzing a cause for the ignition.

A battery management apparatus and an operating method thereof according to an embodiment disclosed herein may receive minimum power from the charger after completion of the charge of the vehicle to maintain an operation mode without entering the sleep mode, thereby detecting in advance a cause for ignition inside the vehicle and taking measures to the ignition.

A battery management apparatus and an operating method thereof according to an embodiment disclosed herein may provide, to the user, a user interface for selecting whether to enter the sleep mode or maintain the operation mode to the user after completion of the charge of the vehicle, thereby allowing the user to make selection.

Moreover, various effects recognized directly or indirectly from the disclosure may be provided.

### [DESCRIPTION OF DRAWINGS]

FIG. 1 is a block diagram of a general battery pack.
FIG. 2 is a view showing a vehicle including a battery management apparatus, according to an embodiment disclosed herein.
FIG. 3 is a block diagram of a battery management apparatus according to an embodiment disclosed herein.
FIG. 4 shows an example of a display of a battery management apparatus according to an embodiment disclosed herein.
FIG. 5 is a flowchart of an operating method of a battery management apparatus according to an embodiment disclosed herein.
FIGS. 6 to 8 are flowcharts of an operating method of a battery management apparatus, according to an embodiment disclosed herein.
FIG. 9 is a block diagram showing a hardware configuration of a computing system for performing an operating method of a battery management apparatus, according to an embodiment disclosed herein.

### [MODE FOR INVENTION]

Hereinafter, embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

To describe a component of an embodiment disclosed herein, terms such as first, second, A, B, (a), (b), etc., may be used. These terms are used merely for distinguishing one component from another component and do not limit the component to the essence, sequence, order, etc., of the component. The terms used herein, including technical and scientific terms, have the same meanings as terms that are generally understood by those skilled in the art, as long as the terms are not differently defined. Generally, the terms defined in a generally used dictionary should be interpreted as having the same meanings as the contextual meanings of the relevant technology and should not be interpreted as having ideal or exaggerated meanings unless they are clearly defined in the present application.

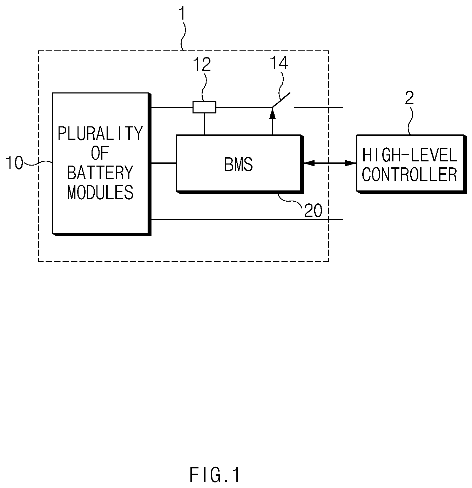

FIG. 1 is a block diagram of a general battery pack.

Referring to FIG. 1, a battery control system including a battery pack 1 and a higher-level controller 2 included in a higher-level system according to an embodiment of the present disclosure is schematically shown.

As shown in FIG. 1, the battery pack 1 may include a battery module 10 that includes one or more battery cells and is chargeable/dischargeable, a switching unit 14 serially connected to a positive (+) terminal side or a negative (-) terminal side of the battery module 10 to control a charging/discharging current flow of the battery module 10, and a battery management system 20 for control and management to prevent overcharging and over-discharging by monitoring voltage, current, temperature, etc., of the battery pack 1. The battery pack 1 may include the battery module 10, the sensor 12, the switching unit 14, and the battery management system 20 provided in plural.

Herein, as the switching unit 14 which is an element for controlling a current flow for charging or discharging of the plurality of battery modules 10, for example, at least one relay, magnetic contactor, etc., may be used according to specifications of the battery pack 1.

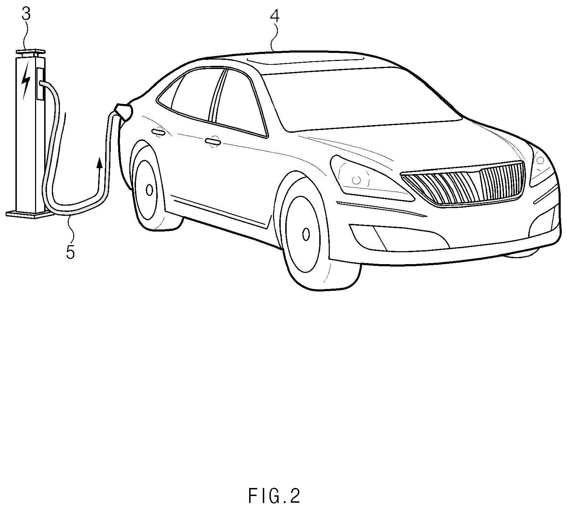

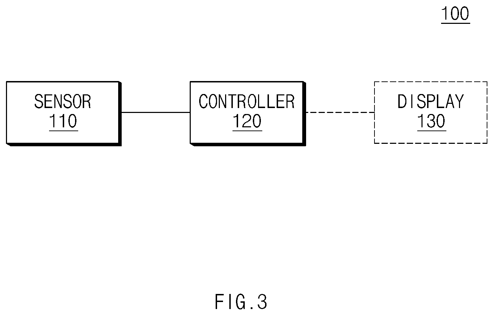

The battery management system 20, which is an interface for receiving measurement values of the above-described various parameter values, may include a plurality of terminals and a circuit, etc., connected thereto to process input values. The battery management system 20 may control on/off of the switching unit 14, e.g., a relay, a contactor, etc., and may be connected to the battery module 10 to monitor the state of each battery module 10. According to an embodiment, the battery management system 20 may include a battery management apparatus 100 of FIG. 3. According to another embodiment, the battery management system 20 may be different from the battery management apparatus 100 of FIG. 2. That is, the battery management apparatus 100 of FIG. 3 may be included in the battery pack 1 and may be configured as another device outside the battery pack 1.

The higher-level controller 2 may transmit a control signal regarding the battery module 10 to the battery management system 20. Thus, the battery management system 20 may also be controlled in terms of an operation thereof based on a signal applied from the higher-level controller 2.

FIG. 2 is a view showing a vehicle including a battery management apparatus, according to an embodiment disclosed herein.

Referring to FIG. 2, the battery management apparatus (e.g., the battery management apparatus 100 of FIG. 3) according to an embodiment disclosed herein may be included in a vehicle 4. For example, the vehicle 4 may include means of transportation capable of including a battery such as a wheelbarrow, a two-wheeler, a tricycle, a quadricycle, an electric vehicle, an electric bicycle, a truck, a bus, etc.

The charger 3 may charge a battery of the vehicle 4. For example, the charger 3 may be connected to the vehicle 4 through a charging cable 5, and charge the vehicle 4.

Depending on an embodiment, the charger 3 may continuously supply power when the vehicle 4 is completely charged. For example, the vehicle 4 may receive power for monitoring fire from the charger 3 upon completion of charge. In another example, the vehicle 4 may receive minimum power for monitoring the fire of the vehicle 4 from the charger 3.

FIG. 3 is a block diagram of a battery management apparatus according to an embodiment disclosed herein.

Referring to FIG. 3, the battery management apparatus 100 according to an embodiment disclosed herein may include a sensor 110 and a controller 120. Depending on an embodiment, the battery management apparatus 100 may be included in the vehicle 4 of FIG. 2. Depending on an embodiment, the battery management apparatus 100 may be included in the BMS 20 of FIG. 1 or may be another device that is different from the BMS 20 of FIG. 1.

The sensor 110 may generate information about occurrence of the fire. For example, the sensor 110 may detect at least any one of temperature, gas, voltage deviation between battery cells, generation of light, and over-voltage and over-current. In another example, the sensor 110 may include at least any one of a voltage detecting sensor, a current detecting sensor, a thermistor, a temperature sensor, a light detecting sensor, and a gas sensor.

Depending on an embodiment, the sensor 110 may detect at least any one of battery electrolyte leakage, insulation breakdown, 2 line-to-ground fault, and pouch tear. According to another embodiment, the sensor 110 may sense at least any one of gas, pressure, current, insulating resistance, temperature, and light emission of a battery and generate information about occurrence of fire based on sensed information.

The controller 120 may control charge of the battery based on power for charging the battery, supplied from the charger. For example, the controller 120 may control charge of the battery based on state information such as voltage, current, SoC, etc., of the battery.

The controller 120 may monitor the information about occurrence of the fire, based on power for monitoring the fire, supplied from the charger, upon completion of the charge of the battery. For example, the controller 120 may maintain an operation mode (or a monitoring mode) based on power supplied to the vehicle upon completion of the charge of the battery, and the controller 120 may monitor the information about occurrence of the fire in the operation mode. For example, the operation mode may be a mode where a function of the battery management apparatus 100 may be performed. In another example, the opposite of the operation mode may be the sleep mode, and when the controller 120 enters the sleep mode, the function of the controller 120 may not be performed.

The controller 120 may determine whether the fire occurs, based on a monitoring result. For example, the controller 120 may determine, based on the information about occurrence of the fire, obtained as the monitoring result, that the fire occurs, in at least any one case of when a temperature increases above a set value, when generated light is generated above a set value, when gas is generated above a set value, over-voltage occurs above a set value, and when a voltage deviation between battery cells is a set value or higher.

The controller 120 may control another internal device to perform an operation for preventing the fire, based on whether the fire occurs. For example, the controller 120 may control another device inside the vehicle to perform at least any one of a forced vent operation, a fast cooling operation, and an operation of extinguishing the fire through a water nozzle. In another example, the controller 120 may prevent ignition of the vehicle by shutting down all systems inside the vehicle when the fire is expected to occur. Depending on an embodiment, the controller 120 may determine whether the fire occurs and control another device inside the vehicle to perform an operation for preventing the fire of the vehicle.

The controller 120 may store the information about the fire in a charger (e.g., the charger 2 of FIG. 2) or the battery management apparatus 100 when determining that the fire occurs. For example, when the fire occurs, to prevent loss of data, when determining that the fire occurs, the controller 120 may store the information about the fire, collected in the sensor 110, in the battery management apparatus 100 or the charger. Depending on an embodiment, the controller 120 may transmit the information about the fire to an external server (e.g., the high-level controller 2 of FIG. 1).

Depending on an embodiment, the controller 120 may receive minimum power for determining whether the fire occurs from a charger (e.g., the charger 3 of FIG. 2).

The controller 120 may determine whether connection with the charger is released, upon completion of charge of the battery. For example, when determining that connection with the charger is not released, the controller 120 may request supply of power for monitoring the fire to the charger and receive power for monitoring the fire from the charger. In another example, when determining that connection with the charger is released, the controller 120 may switch to the sleep mode. According to an embodiment, when connection with the charger is released, it means that a user of the vehicle is present in the field, such that the controller 120 may switch to the sleep mode to prevent the battery from being discharged.

The battery management apparatus 100 according to an embodiment disclosed herein may further include a display 130.

The display 130 may receive a user input. For example, the display 130 may provide a user interface to the user to allow the user to set whether to switch the battery management apparatus 100 to the sleep mode.

Depending on an embodiment, the display 130 may provide a user interface to the user to allow the user to set whether to switch the battery management apparatus 100 to the sleep mode or maintain the battery management apparatus 100 in the operation mode, when charge is completed.

The controller 120 may receive a user command for activating or deactivating a fire monitoring function. For example, the controller 120 may receive a user command from the display 130.

The controller 120 may determine whether to activate the fire monitoring function based on the user command. For example, upon completion of the charge of the battery during activation of the fire monitoring function in response to a first user command, the controller 120 may monitor the information about occurrence of the fire based on the power for monitoring the fire after completion of the charge. In another example, upon completion of the charge of the battery during deactivation of the fire monitoring function in response to a second user command, the controller 120 may switch to the sleep mode after completion of the charge.

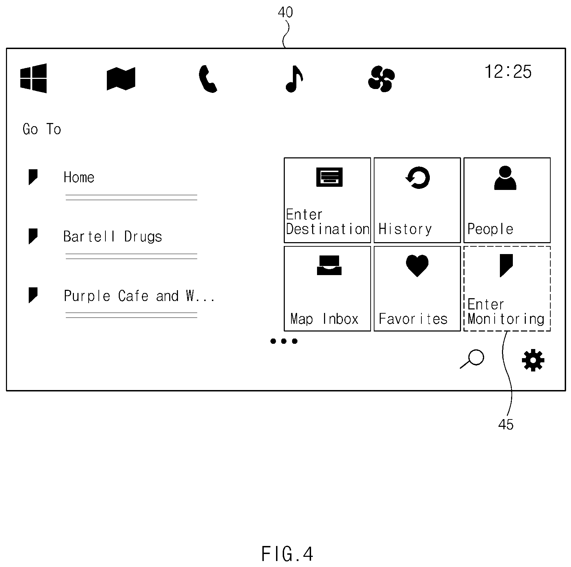

FIG. 4 shows an example of a display of a battery management apparatus according to an embodiment disclosed herein.

Referring to FIG. 4, a user interface 40 of the battery management apparatus 100 according to an embodiment disclosed herein may provide a button 45 for setting whether to maintain an operation mode (or a monitoring mode). For example, the battery management apparatus 100 may receive a user command for activating or deactivating a fire monitoring function through a display.

Depending on an embodiment, through the button 45 for setting whether to maintain the operation mode, the user may select whether to maintain the battery management apparatus 100 in the operation mode or switch the battery management apparatus 100 to the sleep mode when charge of the battery is completed.

Depending on an embodiment, the battery management apparatus 100 may receive a user command for activating or deactivating the fire monitoring function through the button 45.

Depending on an embodiment, the operation mode may be referred to as the monitoring mode.

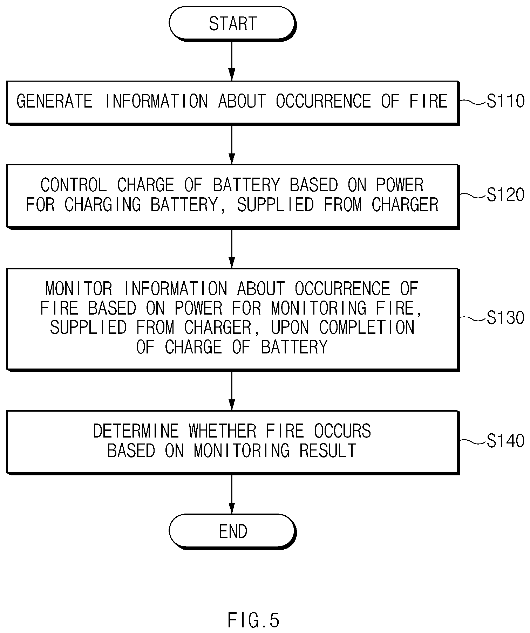

FIG. 5 is a flowchart of an operating method of a battery management apparatus according to an embodiment disclosed herein.

Referring to FIG. 5, an operating method of the battery management apparatus 100 according to an embodiment disclosed herein may include operation S110 of generating information about occurrence of fire, operation S120 of controlling charge of the battery based on power for charging the battery, supplied from a charger, operation S130 of monitoring the information about occurrence of the fire, based on power for monitoring the fire, supplied from the charger, upon completion of the charge of the battery, and operation S140 of determining whether the fire occurs, based on a monitoring result.

In operation S110 of generating the information about occurrence of the fire, the sensor 110 may sense generate the information about occurrence of the fire. For example, the sensor 110 may detect at least any one of temperature, gas, voltage deviation between battery cells, generation of light, and over-voltage and over-current, and generate the information about occurrence of the fire based on the detected information. In another example, the sensor 110 may include at least any one of a voltage detecting sensor, a current detecting sensor, a thermistor, a temperature sensor, a light detecting sensor, and a gas sensor.

In operation S120 of controlling charge of the battery based on the power for charging the battery, supplied from the charger, the controller 120 may control charge of the battery based on the power for charging the battery, supplied from the charger.

In operation S130 of monitoring the information about occurrence of the fire, based on power for monitoring the fire, supplied from the charger, upon completion of the charge of the battery, the controller 120 may monitor the information about occurrence of the fire based on the power for monitoring the fire, supplied from the charger, upon completion of the charge of the battery. For example, the controller 120 may monitor the information about occurrence of the fire, generated from the sensor 110, based on minimum power for monitoring the fire, supplied from the charger.

In operation S140 of determining whether the fire occurs based on the monitoring result, the controller 120 may determine whether the fire occurs based on the monitoring result. For example, the controller 120 may determine, based on the information about occurrence of the fire, that the fire occurs in the vehicle, in at least any one case of when a temperature increases above a set value, when generated light is generated above a set value, when gas is generated above a set value, over-voltage occurs above a set value, and when a voltage deviation between battery cells is a set value or higher.

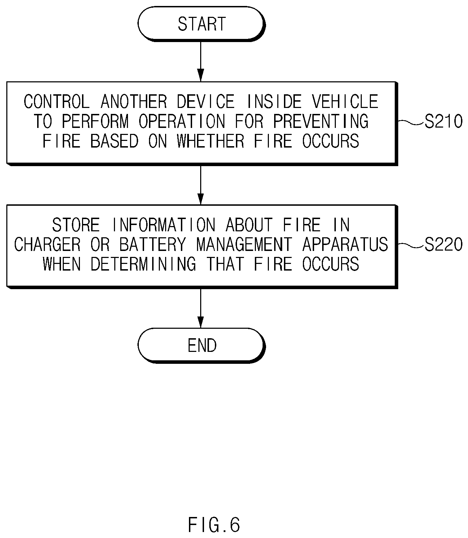

FIGS. 6 to 8 are flowcharts of an operating method of a battery management apparatus, according to an embodiment disclosed herein.

Referring to FIG. 6, an operating method of the battery management apparatus 100 included in the vehicle receiving power for monitoring fire from the charger upon completion of charge according to an embodiment disclosed herein may further include operation S210 of controlling another device inside the vehicle to perform an operation for preventing the fire based on whether the fire occurs, and operation S220 of storing the information about the fire in the charger or the battery management apparatus when determining that the fire occurs. Depending on an embodiment, the operating method of the battery management apparatus 100 may further include at least any one of operation S210 and operation S220.

In operation S210 of controlling another device inside the vehicle to perform an operation for preventing the fire based on whether the fire occurs, the controller 120 may control another device inside the vehicle to perform an operation for preventing the fire, based on whether the fire occurs. For example, the controller 120 may control another device inside the vehicle to perform at least any one of a forced vent operation, a fast cooling operation, and an operation of extinguishing the fire through a water nozzle. In another example, the controller 120 may prevent ignition of the vehicle by shutting down all systems inside the vehicle when the fire is expected to occur.

In operation S220 of storing the information about the fire in the charger or the battery management apparatus when determining that the fire occurs, the controller 120 may store the information about the fire in the charger (e.g., the charger 2 of FIG. 2) or the battery management apparatus 100. For example, when the fire occurs, to prevent loss of data, when determining that the fire occurs, the controller 120 may store the information about the fire, collected in the sensor 110, in the battery management apparatus 100 or the charger. Depending on an embodiment, the controller 120 may transmit the information about the fire to an external server (e.g., the high-level controller 2 of FIG. 1).

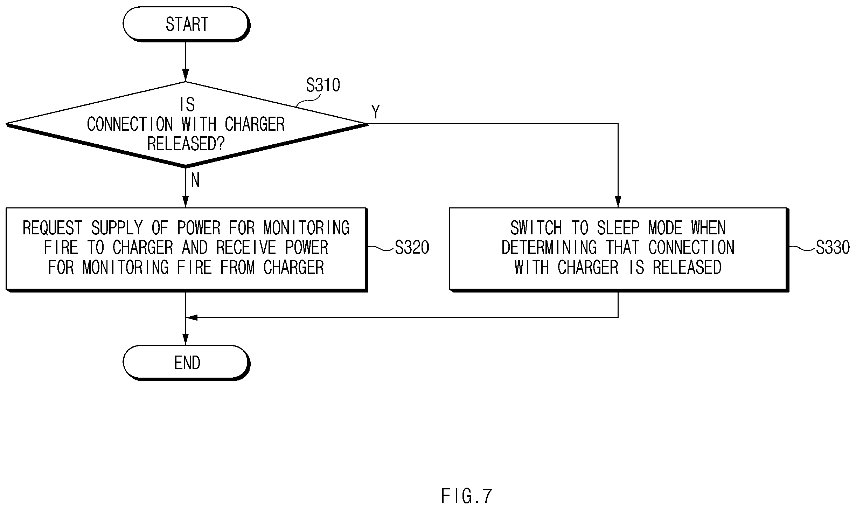

Referring to FIG. 7, the operating method of the battery management apparatus 100 according to an embodiment disclosed herein may further include operation S310 of determining whether connection with the charger is released, upon completion of charge of the battery and operations S320 and S330 of requesting supply of power for monitoring the fire to the charger and receiving the power for monitoring the fire from the charger or switching to the sleep mode when determining that connection with the charger is released.

In operation S310 of determining whether connection with the charger is released upon completion of the charge of the battery, the controller 120 may determine whether connection with the charger is released upon completion of the charge of the battery. For example, when energy delivered from the charger exists, the controller 120 may determine that connection with the charger is not released, and when there is no energy delivered from the charger, the controller 120 may determine that connection with the charger is released.

When determining that connection with the charger is not released, the controller 120 may request supply of power for monitoring the fire to the charger and receive power for monitoring the fire from the charger, in operation S320. For example, the controller 120 may receive minimum power for monitoring the fire from the charger.

When determining that connection with the charger is released, the controller 120 may switch to the sleep mode in operation S330.

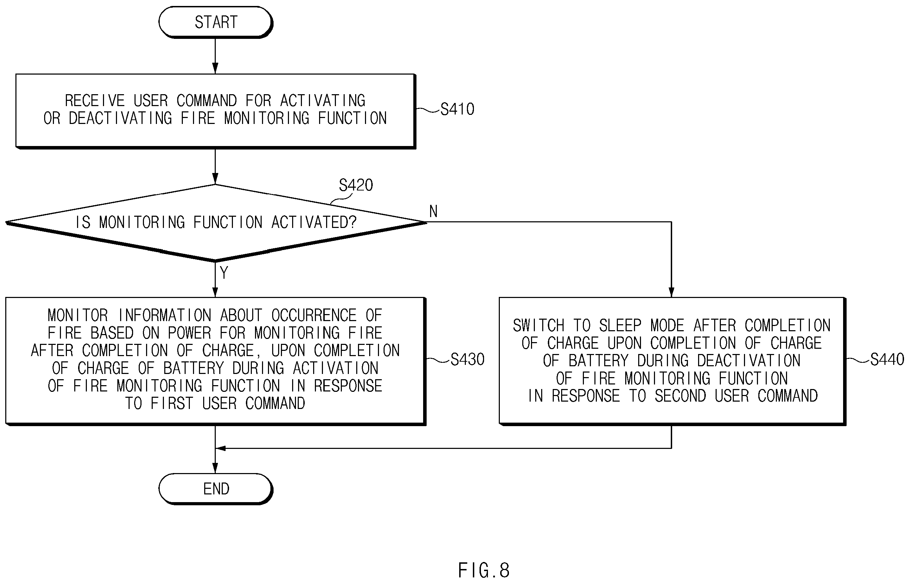

Referring to FIG. 8, the operating method of the battery management apparatus 100 according to an embodiment disclosed herein may further include operation S410 of receiving a user command for activating or deactivating a fire monitoring function, operation S420 of determining activation or deactivation of a monitoring function, operation S430 of, upon completion of the charge of the battery during activation of the fire monitoring function in response to a first user command, monitoring the information about occurrence of the fire based on the power for monitoring the fire after completion of the charge, and operation S440 of, upon completion of the charge of the battery during deactivation of the fire monitoring function in response to a second user command, switching to a sleep mode after completion of the charge.

In operation S410 of receiving the user command for activating or deactivating the fire monitoring function, the controller 120 may receive a user command for activating or deactivating the fire monitoring function. For example, the controller 120 may receive a user command received from the display 130.

In operation S420 of determining activation or deactivation of the monitoring function, the controller 120 may determine activation or deactivation of the monitoring function based on a user command.

When the user input (e.g., the first user command) for activating the monitoring function is received, in operation S430, upon completion of the charge of the battery during activation of the fire monitoring function, the controller 120 may monitor the information about occurrence of the fire based on the power for monitoring the fire after completion of the charge.

When the user input (e.g., the second user command) for deactivating the monitoring function is received, in operation S440, upon completion of the charge of the battery during deactivation of the fire monitoring function, the controller 120 may switch to the sleep mode after completion of the charge.

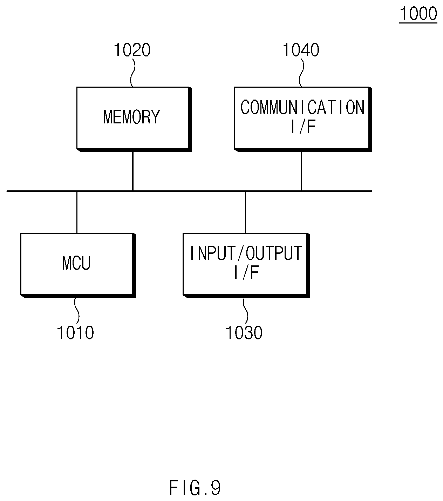

FIG. 9 is a block diagram showing a hardware configuration of a computing system for performing an operating method of a battery management apparatus, according to an embodiment disclosed herein.

Referring to FIG. 9, a computing system 1000 according to an embodiment disclosed herein may include an MCU 1010, a memory 1020, an input/output I/F 1030, and a communication I/F 1040.

The MCU 1010 may be a processor that executes various programs (e.g., a battery pack voltage or current collection program, a relay control program, a battery fire detection program, etc.) stored in the memory 1020, processes various information including a voltage, a temperature, occurrence of fire, etc., of a battery pack through these programs, and executes the above-described functions of the battery management apparatus shown in FIG. 2.

The memory 1020 may store various programs regarding log information collection and diagnosis of the battery, etc. The memory 1020 may store various information such as a current and a voltage of the battery, and a voltage, a temperature, etc., of the battery pack.

The memory 1020 may be provided in plural, depending on a need. The memory 1020 may be volatile memory or non-volatile memory. For the memory 1020 as the volatile memory, random access memory (RAM), dynamic RAM (DRAM), static RAM (SRAM), etc., may be used. For the memory 1020 as the nonvolatile memory, read only memory (ROM), programmable ROM (PROM), electrically alterable ROM (EAROM), erasable PROM (EPROM), electrically erasable PROM (EEPROM), flash memory, etc., may be used. The above-listed examples of the memory 1020 are merely examples and are not limited thereto.

The input/output I/F 1030 may provide an interface for transmitting and receiving data by connecting an input device (not shown) such as a keyboard, a mouse, a touch panel, etc., and an output device such as a display (not shown), etc., to the MCU 1010.

The communication I/F 1040, which is a component capable of transmitting and receiving various data to and from a server, may be various devices capable of supporting wired or wireless communication. For example, the battery management apparatus may transmit and receive a relay control program or information such as a voltage, a current, a temperature, and occurrence of fire of various battery packs from an external server separately provided through the communication I/F 1040.

As such, a computer program according to an embodiment disclosed herein may be recorded in the memory 1020 and processed by the MCU 1010, thus being implemented as a module that performs functions shown in FIG. 3.

The above description is merely illustrative of the technical idea of the present disclosure, and various modifications and variations will be possible without departing from the essential characteristics of embodiments of the present disclosure by those of ordinary skill in the art to which the embodiments disclosed herein pertains.

## Claims

1. A battery management apparatus (100) comprising:
a sensor (110) configured to generate information about occurrence of fire; and
a controller (120) configured to control charge of the battery (10) based on power for charging the battery, supplied from a charger (3), monitor the information about occurrence of the fire based on power for monitoring the fire, supplied from the charger (3), upon completion of charge of the battery (10), and determine whether the fire occurs based on a monitoring result;
wherein the controller (120) is **characterized in that** it is further configured to:
receive a user command for activating or deactivating a fire monitoring function; upon completion of the charge of the battery (10) during activation of the fire monitoring function in response to a first user command, monitor the information about occurrence of the fire based on the power for monitoring the fire after completion of the charge; and
upon completion of the charge of the battery (10) during deactivation of the fire monitoring function in response to a second user command, switch to a sleep mode after completion of the charge.

2. The battery management apparatus of claim 1, wherein the controller (120) is further configured to control another device inside the vehicle (4) to perform an operation for preventing the fire, based on whether the fire occurs.

3. The battery management apparatus of claim 1, wherein the controller (120) is further configured to store information about the fire in the charger (3) or the battery management apparatus (100) when determining that the fire occurs.

4. The battery management apparatus of claim 1, wherein the controller (120) is further configured to receive minimum power for determining whether the fire occurs from the charger (3).

5. The battery management apparatus of claim 1, wherein the controller (120) is further configured to:
determine whether connection with the charger (3) is released, upon completion of the charge of the battery (10);
request supply of power for monitoring the fire to the charger (3) when determining that connection with the charger (3) is not released; and
receive the power for monitoring the fire from the charger (3).

6. The battery management apparatus of claim 5, wherein the controller (120) is further configured to switch to a sleep mode when determining that connection with the charger (3) is released.

7. An operating method of a battery management apparatus, the operating method comprising:
generating (S110) information about occurrence of fire;
controlling (S120) charge of a battery (10) based on power for charging the battery, supplied from a charger (3);
monitoring (S130) the information about occurrence of the fire, based on power for monitoring the fire, supplied from the charger (3), upon completion of the charge of the battery (10); and
determining (S140) whether the fire occurs, based on a monitoring result;
the method being **characterized in** further comprising::
receiving (S410) a user command for activating or deactivating a fire monitoring function;
upon completion of the charge of the battery (10) during activation of the fire monitoring function in response to a first user command, monitoring (S430) the information about occurrence of the fire based on the power for monitoring the fire after completion of the charge; and
upon completion of the charge of the battery (10) during deactivation of the fire monitoring function in response to a second user command, switching (S440) to a sleep mode after completion of the charge..

8. The operating method of claim 7, further comprising controlling (S210) another device inside the vehicle (4) to perform an operation for preventing the fire, based on whether the fire occurs.

9. The operating method of claim 7, further comprising storing information (S220) about the fire in the charger or the battery management apparatus when determining that the fire occurs.

10. The operating method of claim 7, further comprising:
determining (S310) whether connection with the charger (3) is released, upon completion of the charge of the battery (10); and
requesting (S320) supply of power for monitoring the fire to the charger (3) when determining that connection with the charger -3) is not released and receiving power for monitoring the fire from the charger (3), or
switching (S330) to a sleep mode when determining that connection with the charger (3) is released.

## Patentansprüche

1. Batterieverwaltungsvorrichtung (100), umfassend:
einen Sensor (110), welcher dazu eingerichtet ist, Informationen über ein Auftreten eines Feuers zu erzeugen; und
eine Steuereinheit (120), welche dazu eingerichtet ist, ein Aufladen der Batterie (10) auf Grundlage einer Energie zum Aufladen der Batterie zu steuern, welche von einer Ladeeinheit (3) zugeführt wird, die Informationen über ein Auftreten eines Feuers auf Grundlage einer Energie zum Überwachen des Feuers, welche von der Ladeeinheit (3) zugeführt wird, im Zuge einer Beendigung einer Aufladung der Batterie (10) zu überwachen, und auf Grundlage eines Überwachungsergebnisses zu bestimmen, ob das Feuer auftritt;
wobei die Steuereinheit (120) **dadurch gekennzeichnet ist, dass** sie ferner eingerichtet ist, zum:
Empfangen eines Nutzerbefehls zum Aktivieren oder Deaktivieren einer Feuer-Überwachungsfunktion;
im Zuge einer Beendigung der Aufladung der Batterie (10), während einer Aktivierung der Feuer-Überwachungsfunktion als Reaktion auf einen ersten Nutzerbefehl, Überwachen der Informationen über ein Auftreten des Feuers auf Grundlage der Energie zum Überwachen des Feuers nach einer Beendigung der Aufladung; und
im Zuge einer Beendigung der Aufladung der Batterie (10), während einer Deaktivierung der Feuer-Überwachungsfunktion als Reaktion auf einen zweiten Nutzerbefehl, Wechseln in einen Schlafmodus nach einer Beendigung der Aufladung.

2. Batterieverwaltungsvorrichtung nach Anspruch 1, wobei die Steuereinheit (120) ferner dazu eingerichtet ist, eine weitere Vorrichtung innerhalb des Fahrzeugs (4) zu steuern, um auf Grundlage, ob das Feuer auftritt, einen Vorgang zum Verhindern des Feuers durchzuführen.

3. Batterieverwaltungsvorrichtung nach Anspruch 1, wobei die Steuereinheit (120) ferner dazu eingerichtet ist, Informationen über das Feuer in der Ladeeinheit (3) oder der Batterieverwaltungsvorrichtung (100) zu speichern, wenn bestimmt wird, dass das Feuer auftritt.

4. Batterieverwaltungsvorrichtung nach Anspruch 1, wobei die Steuereinheit (120) ferner dazu eingerichtet ist, eine minimale Energie zum Bestimmen, ob das Feuer auftritt, von der Ladeeinheit (3) zu erhalten.

5. Batterieverwaltungsvorrichtung nach Anspruch 1, wobei die Steuereinheit (120) ferner eingerichtet ist, zum:
Bestimmen, ob eine Verbindung mit der Ladeeinheit (3) freigegeben ist, im Zuge einer Beendigung der Aufladung der Batterie (10);
Anfordern einer Energiezufuhr zum Überwachen des Feuers an die Ladeeinheit (3), wenn bestimmt wird, dass eine Verbindung mit der Ladeeinheit (3) nicht freigegeben ist; und
Erhalten der Energie zum Überwachen des Feuers von der Ladeeinheit (3).

6. Batterieverwaltungsvorrichtung nach Anspruch 5, wobei die Steuereinheit (120) ferner dazu eingerichtet ist, in einen Schlafmodus zu wechseln, wenn bestimmt wird, dass eine Verbindung mit der Ladeeinheit (3) freigegeben ist.

7. Betriebsverfahren einer Batterieverwaltungsvorrichtung, wobei das Betriebsverfahren umfasst:
Erzeugen (S110) von Informationen über ein Auftreten eines Feuers;
Steuern (S120) einer Aufladung einer Batterie (10) auf Grundlage einer Energie zum Aufladen der Batterie, welche von einer Ladeeinheit (3) zugeführt wird;
Überwachen (S130) der Informationen über ein Auftreten des Feuers auf Grundlage einer Energie zum Überwachen des Feuers, welche von der Ladeeinheit (3) zugeführt wird, im Zuge einer Beendigung der Aufladung der Batterie (10); und
Bestimmen (S140), ob das Feuer auftritt, auf Grundlage eines Überwachungsergebnisses;
wobei das Verfahren **dadurch gekennzeichnet ist, dass** es ferner umfasst:
Empfangen (S410) eines Nutzerbefehls zum Aktivieren oder Deaktivieren einer Feuer-Überwachungsfunktion;
im Zuge einer Beendigung der Aufladung der Batterie (10), während einer Aktivierung der Feuer-Überwachungsfunktion als Reaktion auf einen ersten Nutzerbefehl, Überwachen (S430) der Informationen über ein Auftreten des Feuers auf Grundlage der Energie zum Überwachen des Feuers nach einer Beendigung der Aufladung; und
im Zuge einer Beendigung der Aufladung der Batterie (10), während einer Deaktivierung der Feuer-Überwachungsfunktion als Reaktion auf einen zweiten Nutzerbefehl, Wechseln (S440) in einen Schlafmodus nach einer Beendigung der Aufladung.

8. Betriebsverfahren nach Anspruch 7, ferner umfassend ein Steuern (S210) einer weiteren Vorrichtung innerhalb des Fahrzeugs (4), um auf Grundlage, ob das Feuer auftritt, einen Vorgang zum Verhindern des Feuers durchzuführen.

9. Betriebsverfahren nach Anspruch 7, ferner umfassend ein Speichern von Informationen (S220) über das Feuer in der Ladeeinheit oder der Batterieverwaltungsvorrichtung, wenn bestimmt wird, dass das Feuer auftritt.

10. Betriebsverfahren nach Anspruch 7, ferner umfassend:
Bestimmen (S310), ob eine Verbindung mit der Ladeeinheit (3) freigegeben ist, im Zuge einer Beendigung der Aufladung der Batterie (10); und
Anfordern (S320) einer Energiezufuhr zum Überwachen des Feuers an die Ladeeinheit (3), wenn bestimmt wird, dass eine Verbindung mit der Ladeeinheit (3) nicht freigegeben ist, und Erhalten der Energie zum Überwachen des Feuers von der Ladeeinheit (3), oder
Wechseln (S330) in einen Schlafmodus, wenn bestimmt wird, dass eine Verbindung mit der Ladeeinheit (3) freigegeben wird.

## Revendications

1. Appareil de gestion de batterie (100) comprenant :
un capteur (110) configuré pour générer des informations sur l'apparition d'un incendie ; et
un dispositif de commande (120) configuré pour commander la charge de la batterie (10) sur la base d'une alimentation de charge de la batterie, fournie par un chargeur (3), surveiller les informations sur l'apparition de l'incendie sur la base d'une alimentation de surveillance de l'incendie, fournie par le chargeur (3), à la fin de la charge de la batterie (10), et déterminer l'apparition ou non de l'incendie sur la base d'un résultat de surveillance ;
dans lequel le dispositif de commande (120) est **caractérisé en ce qu'**il est en outre configuré pour :
recevoir une instruction d'utilisateur d'activation ou de désactivation d'une fonction de surveillance d'incendie ;
à la fin de la charge de la batterie (10) pendant l'activation de la fonction de surveillance d'incendie en réponse à une première instruction d'utilisateur, surveiller les informations sur l'apparition de l'incendie sur la base de l'alimentation de surveillance d'incendie après la fin de la charge ; et
à la fin de la charge de la batterie (10) pendant la désactivation de la fonction de surveillance d'incendie en réponse à une deuxième instruction d'utilisateur, passer en mode veille après la fin de la charge.

2. Appareil de gestion de batterie selon la revendication 1, dans lequel le dispositif de commande (120) est en outre configuré pour commander un autre dispositif à l'intérieur du véhicule (4) pour réaliser une opération de prévention de l'incendie, sur la base de l'apparition ou non de l'incendie.

3. Appareil de gestion de batterie selon la revendication 1, dans lequel le dispositif de commande (120) est en outre configuré pour stocker des informations sur l'incendie dans le chargeur (3) ou l'appareil de gestion de batterie (100) lors de la détermination de l'apparition de l'incendie.

4. Appareil de gestion de batterie selon la revendication 1, dans lequel le dispositif de commande (120) est en outre configuré pour recevoir une alimentation minimale pour déterminer l'apparition ou non de l'incendie au niveau du chargeur (3).

5. Appareil de gestion de batterie selon la revendication 1, dans lequel le dispositif de commande (120) est en outre configuré pour :
déterminer la libération ou non de la connexion avec le chargeur (3), à la fin de la charge de la batterie (10) ;
demander la fourniture d'une alimentation de surveillance de l'incendie au chargeur (3) lors de la détermination de la non-libération de la connexion avec le chargeur (3) ; et
recevoir l'alimentation de surveillance de l'incendie en provenance du chargeur (3).

6. Appareil de gestion de batterie selon la revendication 5, dans lequel le dispositif de commande (120) est en outre configuré pour passer en mode veille lors de la détermination de la libération de la connexion avec le chargeur (3).

7. Procédé de fonctionnement d'un appareil de gestion de batterie, le procédé de fonctionnement comprenant :
la génération (S110) d'informations sur l'apparition d'un incendie ;
la commande (S120) de la charge d'une batterie (10) sur la base d'une alimentation de charge de la batterie, fournie par un chargeur (3) ;
la surveillance (S130) des informations sur l'apparition de l'incendie, sur la base de l'alimentation de surveillance de l'incendie, fournie par le chargeur (3), à la fin de la charge de la batterie (10) ; et
la détermination (S140) de l'apparition ou non de l'incendie, sur la base d'un résultat de surveillance ;
le procédé étant **caractérisé en ce qu'**il comprend en outre :
la réception (S410) d'une instruction d'utilisateur d'activation ou de désactivation d'une fonction de surveillance d'incendie ;
à la fin de la charge de la batterie (10) pendant l'activation de la fonction de surveillance d'incendie en réponse à une première instruction d'utilisateur, la surveillance (S430) des informations sur l'apparition de l'incendie sur la base de l'alimentation de surveillance d'incendie après la fin de la charge ; et
à la fin de la charge de la batterie (10) pendant la désactivation de la fonction de surveillance d'incendie en réponse à une deuxième instruction d'utilisateur, le passage (S440) en mode veille après la fin de la charge.

8. Procédé de fonctionnement selon la revendication 7, comprenant en outre la commande (S210) d'un autre dispositif à l'intérieur du véhicule (4) pour réaliser une opération de prévention de l'incendie, sur la base de l'apparition ou non de l'incendie.

9. Procédé de fonctionnement selon la revendication 7, comprenant en outre le stockage d'informations (S220) sur l'incendie dans le chargeur ou l'appareil de gestion de batterie lors de la détermination de l'apparition de l'incendie.

10. Procédé de fonctionnement selon la revendication 7, comprenant en outre :
la détermination (S310) de la libération ou non de la connexion avec le chargeur (3), à la fin de la charge de la batterie (10) ; et
la demande (S320) de la fourniture d'une alimentation de surveillance de l'incendie au chargeur (3) lors de la détermination de la non-libération de la connexion avec le chargeur (3) et la réception d'une alimentation de surveillance de l'incendie en provenance du chargeur (3), ou
le passage (S330) en mode veille lors de la détermination de la libération de la connexion avec le chargeur (3).
